# EUROPEAN PATENT APPLICATION

(11) **EP 2 977 355 A1**
(43) Date of publication of application: **27.01.2016**
(21) Application number: 14771176.6
(22) Date of filing: 21.03.2014
(51) Int. Cl.: C02F 1/461, C02F 1/50, C02F 1/66, C02F 1/28, B63B 13/00

(54) **BALLAST WATER TREATMENT SYSTEM**

(30) Priority: 22.03.2013 KR 20130031147; 22.03.2013 KR 20130031157
(71) Applicant: Tech Cross Co., Ltd., Seoul 135-879 (KR)
(72) Inventor: PARK, Kyuwon, Busan 608-090 (KR); KIM, Seongtae, Asan-si Chungcheongnam-do 336-750 (KR); LEE, Haidon, Suwon-si Gyeonggi-do 443-470 (KR); PARK, Yongseok, Pyeongtaek-si Gyeonggi-do 451-885 (KR); KIM, Daewon, Asan-si Chungcheongnam-do 336-040 (KR); LEE, Kisung, Pyeongtaek-si Gyeonggi-do 451-766 (KR); KU, Jahun, Namyangju-si Gyeonggi-do 472-795 (KR); KIM, Yujin, Hwaseong-si Gyeonggi-do 445-360 (KR)
(74) Representative: Cabinet Plasseraud
(86) International application number: PCT/KR2014/002415
(87) International publication number: WO 2014/148867

(57) **Abstract**

The present invention relates to a ballast water treatment system. The ballast water treatment system comprises: a filter and a electrolysis unit for receiving ballast water from the outside, and filtering and electrolyzing the ballast water; a first sensor unit for measuring seawater characteristics of the ballast water passing through the filter and the electrolysis unit; a control unit for determining a contamination level of the ballast water according to the measured seawater characteristic values so as to generate control signals for determining the strength of electrolysis and the input amount of chlorine dioxide; a chlorine dioxide generation unit for generating the chlorine dioxide; a UV/TiO2 system which includes a TiO2-coated plate, generates an OH radical through an interaction between ultraviolet rays and TiO2 so as to enable the OH radical to sterilize residual microorganisms included in the ballast water passing through the filter and the electrolysis unit; an automatic neutralization treatment device which includes a neutralizing agent, receives a neutralizing agent discharge signal from the control unit, and neutralizes the ballast water passing through the filter and the electrolysis unit; and a second sensor unit for measuring the TRO concentration of the ballast water neutralized in the automatic neutralization treatment device and transferring the measurement result to the control unit, wherein the control unit generates a control signal for controlling the amount of the neutralizing agent discharged from the automatic neutralization treatment device according to the measurement result received from the second sensor unit. Thus, the sterilization efficiency for the ballast water satisfies the USCG standards during the ballasting step for the ballast water.

## Description

### BACKGROUND OF THE INVENTION

The present invention relates to a ballast water treatment system.

Ship under operation is introduced for ballast water from the outside, to keep the ship balanced. In this way, the ballast water introduced into the vessel is sterilized and stored in the vessel, and when discharging outside, the ballast water is discharged to the outside with neutralized condition by introducing the neutralizing agent.

The ballast water introduced into the vessel is filtered by using one of the methods of mechanical, physical, or chemical method to remove solids and microorganisms contained in the ballast water. In this case, as for a mechanical method, a filtering method can be used for the ballast water which should be sterilized of microorganisms.

For the filter for the ballast water, the filter can be an edged wire, a wire mesh, or a disk typed filter.

And, as for the physical method, UV (ultraviolet rays) irradiating method and AOP (advanced oxidation process) method for generating OH radicals can be used for the ballast water which should be sterilized of microorganisms.

Besides, as for the chemical method, using the chlorine-based fungicides or electrolysis, hypochlorite (HClO) and hypochlorite ion (OCl-) producing method can be used to treat the ballast water which should be sterilized of microorganisms.

As for another example of a chemical method, it is possible to use a method of adding chemicals such as O₃, ClO₂.

However, among the sterilization method of ballast water using the method described above, the mechanical method has disadvantages. Difficulties can be possible in washing out the scum attached to a filter, whereby, if using a screen filter such as edged wire or a mesh typed wire filter, clogging can be occurred due to solid.

And, the physical method has disadvantages in possibility of regrowth of microorganisms due to the absence of remaining sterilizing microorganisms. Also, chemical method, additional process is needed to neutralize residual chemicals in the ballast water. These methods have a drawback that there is a limit for sterilizing microorganisms.

### SUMMARY OF THE INVENTION

Accordingly, the present invention is conceived to solve the foregoing problems, and an aspect of the present invention provides to improve the efficiency of sterilizing microorganisms.

Another technical problem which the present invention attempts to solve is to provide a ballast water treatment system which satisfies the criteria for sterilizing microorganisms of USCG (United States Coast Guard) standard.

In accordance with an embodiment of the present invention, there is provided a ballast water treatment including: a filter and an electrolysis unit for receiving ballast water from the outside, and filtering and electrolyzing the ballast water; a first sensor unit for measuring seawater characteristics of the ballast water passing through the filter and the electrolysis unit and output the result of seawater characteristics ; a control unit for determining a contamination level of the ballast water according to the measured seawater characteristic values so as to generate control signals for determining the strength of electrolysis and the input amount of chlorine dioxide; a chlorine dioxide generation unit for generating the chlorine dioxide, receiving the control signal from a control unit, discharging the chlorine dioxide or not according to the control signal ; a UV/TiO2 system which includes a TiO2-coated plate, generates an OH radical through an interaction between ultraviolet rays and TiO2 so as to enable the OH radical to sterilize residual microorganisms included in the ballast water passing through the filter and the electrolysis unit; an automatic neutralization treatment device which includes a neutralizing agent, receives a neutralizing agent discharge signal from the control unit, and neutralizes the ballast water passing through the filter and the electrolysis unit; and a second sensor unit for measuring the TRO(total residual oxidant) concentration of the ballast water neutralized in the automatic neutralization treatment device and transferring the measurement result to the control unit, wherein the control unit generates a control signal for controlling the amount of the neutralizing agent discharged from the automatic neutralization treatment device according to the measurement result received from the second sensor unit.

A filter and a filter of electrolysis unit may be a disk filter.

A filter and an electrolysis unit may be provided by multiply laminated electrode modules with a circular shape of a plate.

Seawater characteristics measured by sensor unit may be one among the conductivity, temperature, TRO concentration of ballast water.

In accordance with an embodiment of the present invention, a ballast water treatment system may include the chlorine dioxide precursor storage tank which store a chlorine dioxide precursor and transfer that precursor to a chlorine dioxide generation unit.

The chlorine dioxide precursor may be NaClO₂, HCl, and NaOCl.

A TiO2-coated plate of a UV/TiO2 system may be formed one of types of mesh structure or punched plate.

In accordance of the present invention, a filter and an electrolysis unit remove or sterilize microorganisms and solids included in the ballast water. And during the ballasting step, according to the results of conductivity, temperature, TRO concentration of ballast water, a chlorine dioxide is discharged into the ballast water to sterilize microorganisms in the ballast water.

And, during deballasting step, a UV/TiO2 system sterilizes residual microorganisms in the ballast water additionally, and neutralizes the ballast water by an automatic neutralization treatment device.

Thus, the sterilization efficiency for the ballast water satisfies the USCG standards during the ballasting step for the ballast water.

Moreover, due to sterilizing residual microorganisms in the ballast water additionally during the deballasting step, the treated ballast water satisfies the criteria for sterilizing microorganisms of USCG (United States Coast Guard) standard much more.

### BRIEF EXPLANATION OF THE DRAWING

Fig.1 is a block diagram of a ballast water treatment system according to an embodiment of the present invention; and
Fig. 2a is an exploded perspective view of a filter and an electrolysis unit for ballast water treatment system according to an embodiment of the present invention; and
Fig. 2b is an exploded perspective view of a filter and an electrolysis unit for ballast water treatment system according to an embodiment of the present invention; and
Fig. 3a is a perspective view of a part of a filter and an electrolysis unit for ballast water treatment system according to an embodiment of the present invention; and
Fig. 3b is a cross-sectional view of a part of a filter and an electrolysis unit for ballast water treatment system according to an embodiment of the present invention; and
Fig. 3c is a perspective view of a electrode which is a part of a filter and an electrolysis unit for ballast water treatment system according to an embodiment of the present invention; and
Fig. 3d is a perspective view of a electrode spacer which is a part of a filter and an electrolysis unit for ballast water treatment system according to an embodiment of the present invention; and
Fig. 4 is a flowchart for the operation of ballast water treatment system according to an embodiment of the present invention.

### DETAILED DESCRIPTION OF THE EMBODIMENTS

In the following, with reference to accompanying drawings, the present invention will be described in detail for a person having knowledge of the normal in the art which this invention pertains to be carried easily. However, the present invention may be embodied in several different ways, but are not limited to the embodiments set forth herein. And, the part that not related to the explanation in the drawings is omitted to clearly describe the present invention. The similar parts throughout this document are denoted by the similar drawing number.

Hereinafter, exemplary embodiments of ballast water treatment system according to the present invention will be described with reference to accompanying drawings.

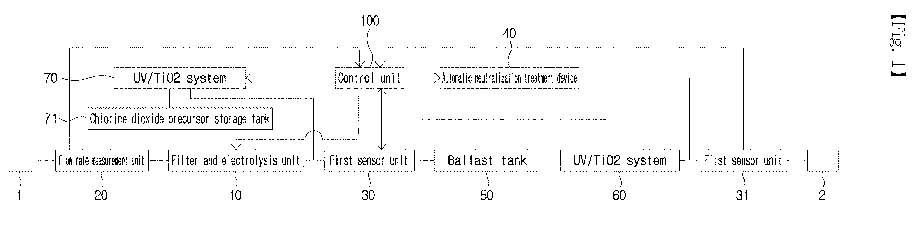

Firstly, an embodiment of ballast water treatment system according to the present invention will be described in detail with reference to Fig.1.

As shown in Fig.1, an embodiment of ballast water treatment system according to the present invention includes:
an inlet(1) for receiving ballast water from the outside; a flow rate measuring unit(20) for measuring the flow rate of ballast water flowed into an inlet(1); a filter and an electrolysis unit(10) for filtering and electrolyzing the ballast water; a first sensor unit(30) for measuring seawater characteristics of the ballast water passing through the filter and the electrolysis unit(10); a chlorine dioxide generation unit(70) for generating the chlorine dioxide to discharge into ballast water; ; a control unit(100) for receiving measured seawater characteristic values from a first sensor unit(30) and monitoring the measured values and controlling a filter and an electrolysis unit(10), a chlorine dioxide generation unit(70), an automatic neutralization treatment device(40); a ballast tank(50) for storing ballast water passing through a first sensor unit(30); a UV/TiO2 system(60) for irradiating ultraviolet rays and reacting TiO2 into the ballast water stored in a ballast tank(50) and discharged to the outside; An automatic neutralization treatment device(40) for injecting neutralizing agent into the ballast water stored in a ballast tank(50) and discharged to the outside; and a second sensor unit(31) for measuring the TRO concentration of the ballast water neutralized in the automatic neutralization treatment device(40); an outlet for discharging ballast water to outside.

In accordance with an embodiment of the present invention, a ballast water treatment system is introduced for seawater (hereinafter referred to as "ballast water") from the outside of the vessel. In this case, through an inlet (sea chest)(1) and a pipe line, ballast water from the outside is introduced into the ballast water treatment system.

And, a flow rate measuring unit (20) measures the flow rate of ballast water introduced through an inlet(2), transfer the measured values to a control unit(100).

A filter and an electrolysis unit (10) sterilize microorganisms in the ballast water introduced from the outside by mechanical and chemical method.

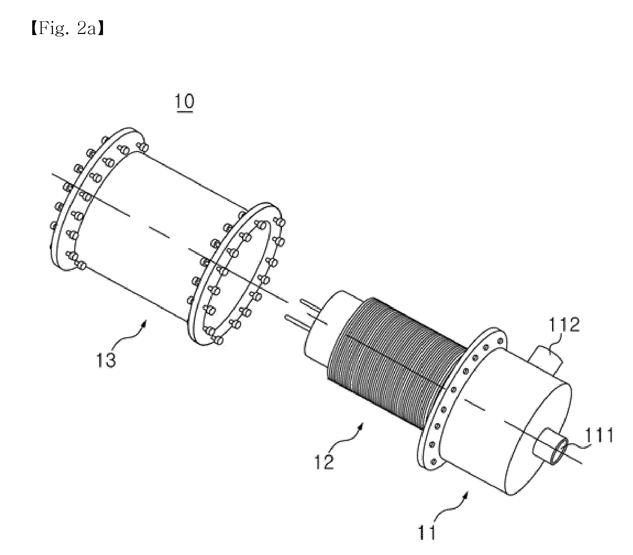

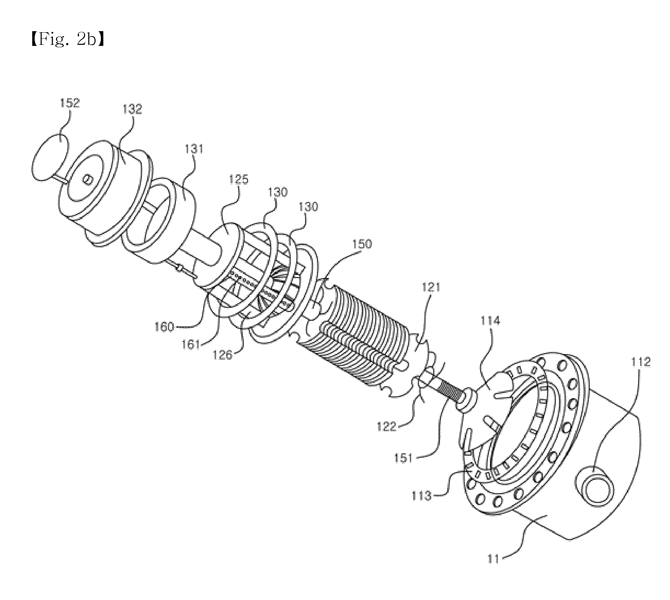

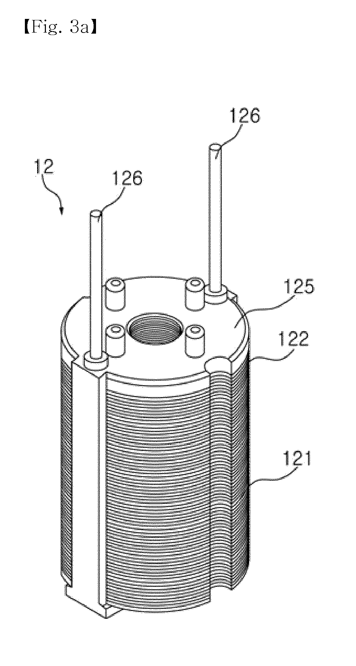

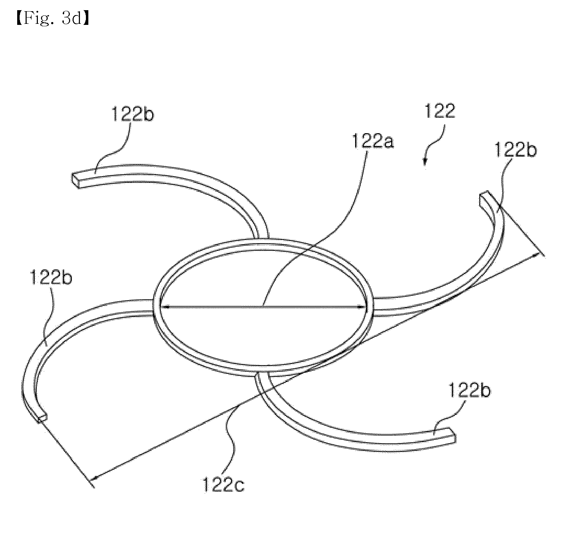

With reference to Fig.2a, Fig.2b, Fig. 3a ∼ Fig.3d, in accordance with an embodiment of the present invention, a filter and an electrolysis unit (10) will be described in more detail. A filter and an electrolysis unit (10) comprise inlet and outlet for introducing and discharge ballast water (hereinafter referred to as "inlet/outlet")(11), an electrolysis unit (12) including plural electrodes(121) for the electrolysis of introduced ballast water, and a cover(13) for protecting an electrolysis unit (12)

With reference to Fig. 2a, an inlet/outlet (11) of a filter and an electrolysis unit (10) comprise inlet(112) for introducing ballast water from the outside and outlet(111) for discharging ballast water filtered in electrolyzed in a filter and an electrolysis unit (10) to the outside.

And, a cover (13) has a fixed connected structure to one end of inlet/outlet(11), In this case, in case of fixed connection with a cover(13) of electrolysis unit and inlet/outlet(11), a filter element is positioned inside of a cover(13), and an electrolysis unit(12) is located inside of a filter element.

With reference to Fig. 2b, elements located in a cover(13) of a filter and an electrolysis unit(10) will be described in detail. A filter and an electrolysis unit (10) comprise a fixing plate(152), a filter pressing cover(132), a filter housing(131) located inside of a filter pressing cover(132), plural electrode modules(121), an electrode module housing(125) located for covering the outside of plural electrode modules(121), filter elements(130) located outside of the electrode module housing(125), a spacer(122) located among plural electrode modules(121), a filter compressing spring(151) rolled in support base(150), a flow path inducing unit(114) located in support base(150), and a rotating derivatives(113) located inside of the inlet/outlet(11).

Firstly, an electrolysis unit(12) including plural electrode modules(121) will be described in detail with reference to Fig. 3a ∼ Fig. 3d.

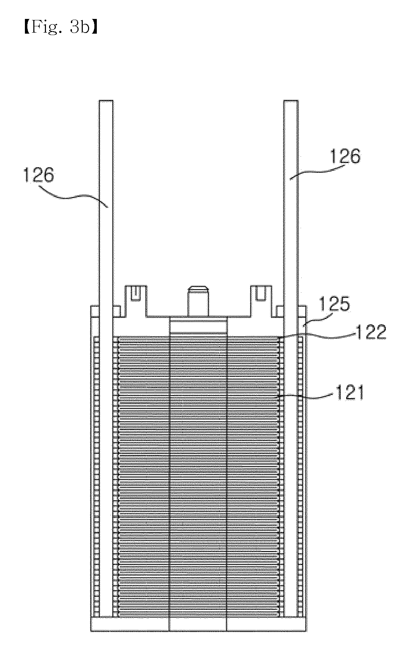

With reference to Fig. 3a and Fig. 3b, an electrode module housing (125) is located for covering the outside of the plural electrode modules (121), in this case, one end of electrode module housing (125) comprise electrode bus bars (126).

In addition, an electrode module housing (125) plays the role of support for supporting filter elements (130) also.

And, an electrode module housing (125) comprises a backwash pipe (160) for back flushing filter elements (130). A backwash pipe (160) is formed to have plural backwash discharge holes (161).

Two electrode bus bars (126) are located in an electrode module housing (125), being connected to an external rectifier (not shown) and being supplied with current. These electrode bus bars (126) transfer the current delivered from the rectifier (not shown) to each electrode module (121).

As shown in Fig. 3a and Fig. 3b, two electrode bus bar(126) is provided, one electrode bus bar(126) is transmitted with the positive current, and the other electrode bus bar(126) is transmitted with the negative current.

And, plural electrode modules(121) located inside the electrode module housing(125) are accumulated along the length direction of the support base(150), in this case, an electrode gap spacer(122) may be located among plural electrode modules.(121).

In this way, plural electrode modules(121) located inside of electrode module housing(125) and transmitted with current from electrode bus bar(126) electrolyze the ballast water introducing into the inlet/outlet(11) and passing through an electrolysis unit(12).

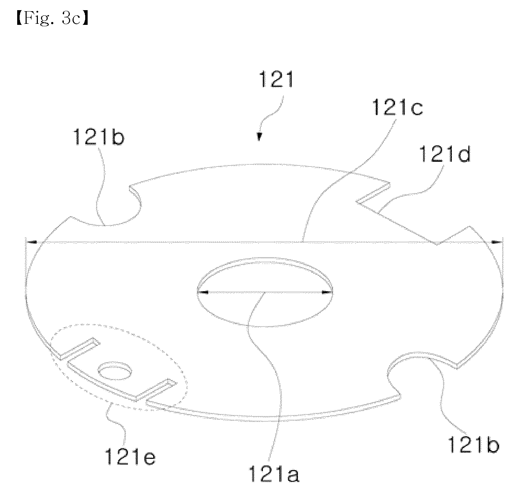

These electrodes module(121) will be described in more detail with reference to Fig. 3c. An electrode(121) is formed as a disk shape with the third diameter(121c), and formed as punched with the second diameter(121a) in the middle of the disk.

And, electrodes module(121) is provided with two of the first grooves (121b) which is punched with the semicircular shape along the circumference of the disk. Two of the first grooves (121b) are paths for the backwash pipe(160) of electrode module housing (125). Thus, when plural electrodes module(121) inside of the electrode module housing (125) is positioned by accumulating, a backwash pipe(160) is located in the first groove(121b) of electrodes module(121) so that electrodes module (121) will be connected inside of an electrode module housing (125).

In addition, electrodes module (121) also comprises the second groove (121d) which is square-shaped, the third groove (121e) located so as to face the second groove (121d).

The third groove (121e) includes a punched part formed thin square -shaped in a direction perpendicular with the perimeter of the disk. The third groove(121e) also includes the circular-shaped punched part between the two square -shaped punched parts, and, in this case, , the circular-shaped punched part should be located so as not to contact the circumference of electrodes module (121),

When electrode modules(121) having these second groove(121d) and the third groove (121e) are connected to the inside of the electrode module housing (125), the electrode bus bar(126) is located passing through the second groove (121d) and the third groove(121e). Accordingly, electrodes module(121) are transmitted a current from bus bars (126) of the electrodes.

Then, with reference to Fig.3d, an electrode gap spacer(122) will be described in detail. An electrode gap spacer(122) may be located between an electrode module(121) and an electrode module(121), or among electrodes module(121) adjacent to the top(or bottom) surface of an electrode module hous ing(125).

In this way, the electrodes gap spacer(122) located between electrodes module (121), as a spacer for inducing rotation of the water, comprises a circular ring having the first diameter(122a), wings(122b) which is connected and formed along the periphery of the ring at regular intervals.

In this case, the distance (122c) between one wing (122b) and other one located on the opposite side of the wing(122b), i.e., the length(122c) of the electrode gap spacer(122) has shorter length than the length(the third diameter)(121c) of the electrode (121) shown in Fig. 3d.

And, the first diameter (122a) of the electrode gap spacer (122) is formed longer than the second diameter(121a), which is formed on the electrode(121) shown in Figure 3d.

Thus, by the electrode gap spacer(122) being provided with wings (122b), an electrode gap spacer(122) is rotated by ballast water which is filtered by the filter element (130) and moves to an electrolysis unit(12). As a result, the electrolysis process efficiency from an electrodes module (121) is higher because the ballast water adjacent to electrode module(121) is further rotated, accordingly, the TRO(total residual oxidant) generation efficiency of the ballast water is increased.

Moreover, by being provided with an electrode gap spacer(122), the ballast water electrolyzed in the electrodes module(121) is rotating, so that there is an effect that scales(impurities such as metal oxides) which may be accumulated in the filter element(130) can be removed.

This electrode gap spacer (122) may be made of an insulating material such as plastic.

With reference to Fig. 2b, a filter and an electrolysis unit (10) will be described again. Filter elements (130) are located outside of an electrode module housing(125).

Filter elements (130) may be a disk filter having the form of a disk. If this disk-shaped filter elements (130) are provided with a plurality, plural filter elements (130) can be located on the outside of the electrode module housing (125) being accumulated.

If plural filter elements(130) are located being accumulated, filter elements(130) is fixed to a constant pressure by the pressing spring(151), in this case, the disk -shaped filter elements(130) may be formed to have a groove in the range of 50*µ*m to 100*µ*m.

These filter elements(130) primarily filter the ballast water introduced through the inlet /outlet (11), filtering the solids or microorganisms in the range of 50*µ*m to 100*µ*m contained in the ballast water.

Accordingly, the filter elements (130) composed of a disk filter, by processing back flushing using a backwash pipe(160), have an effect that clogging of dusts in the filter wires does not occur permanently.

And, the rotating derivative (113) located inside the inlet/outlet(11), is formed to be a ring-shaped and rotates in one direction.

As shown in Fig.2b, rotating derivative (113) is provided with a part protruding at regular intervals on one surface. In this case, due to the protruding part formed on the rotating derivative (113), when the rotating derivative(113) is rotated in one direction, the ballast water adjacent to rotating derivative(113) is rotated in one direction.

At this time, due to the rotation of the rotating derivative(113), solids and microorganisms contained in ballast water rotate in one direction so as to uniformly distributed in the ballast water, which make an effect of improved filtering efficiency of the ballast water in the filter element (130).

This rotating derivative (113) can be rotated by receiving a power from an external motor (not shown).

And, the ballast water located around the rotating derivative(113), rotated in one direction according the rotation of the rotating derivative(113) may be the ballast water which is introduced from the outside through the inlet(112).

A flow path inducing unit (114) is located adjacent to the rotating derivative (113), a rubber which is formed of a rubber material. In more detail, a flow path inducing unit (114) has a shape like a sucker. In this case, the convex part of a flow path inducing unit (114) faces toward the opposite direction of the inlet/outlet (11), and the concave part of a flow path inducing unit (114) faces toward the direction of the inlet/outlet(11).

Having a convex shape in one direction of a flow path inducing unit (114) in this way, ballast water which is filtered and electrolyzed completely and flows from filter elements(130) toward inlet/outlet(11) direction, can flow easily to the inlet/outlet(11) after passing through a flow path inducing unit (114).

In addition, a flow path inducing unit (114) is formed with a plurality of grooves (slit), through grooves of a flow path inducing unit (114), ballast water which is filtered and electrolyzed completely flows to the outlet (111) of inlet/outlet (11).

A flow path inducing unit (114) can be located to the direction of the electrodes module(121) or to the opposite direction.

As an example, when water flowing inside of a filter and an electrolysis unit (10) flows from the filter element (130) toward the direction of the inlet/outlet(11), a flow path inducing unit (114) located so as to face the opposite direction of electrodes module(121) as shown in Fig.2b.

In this way, when a flow path inducing unit (114) is located to face the opposite direction of electrodes module(121), a flow path inducing unit (114), as shown in Fig. 2b, is shrank, and water flow through the empty space formed in a flow path inducing unit (114) toward inlet/outlet(11).

On the other hand, as another example, if water which flows inside a filter and an electrolysis unit(10) for cleaning the filter element(130) flows from the inlet/outlet (11) toward the direction of the filter element(130), an empty space formed in a flow path inducing unit (114) stick to one another and a flow path inducing unit (114) is in a expanded state. Accordingly, the flow path of the water in a filter and an electrolysis unit (10) toward inlet/outlet (11) is closed. Therefore, water can flow only through the backwash pipe.

In this way, when a flow path inducing unit (114) is expanded position, a filter pressing spring (151) located adjacent to a flow path inducing unit (114) is pressed, the backwash water is drawn into the backwash pipe(160) because of the pressure differential derived from the operation of pressing spring(151).

In this case, backwash water drawn into the backwash pipe(160) is discharged from the electrode module housing(125) to the filter element(130) direction along the backwash discharge hole (161). Accordingly, foreign materials such as dust accumulated between the filter element (130) are to be washed.

Then, backwash water discharged from the backwash pipe(160) and washing the filter element (130), flows toward a flow path inducing unit (114). And, backwash water flows along a groove formed in a flow path inducing unit (114), is discharged to the outside of a filter and an electrolysis unit(10) via an outlet(111).

Having the structure in a filter and an electrolysis unit (10) as described above, ballast water introduced from the outside is primarily filtered by the filter element(130) and electrolyzed from plural electrodes module(121). Accordingly, there is an effect that a filter and an electrolysis unit (10) can more effectively remove solids or microorganisms contained in the ship ballast water comparing to using only one of a filter or an electrolysis module.

In addition, because a filter and an electrolysis unit (10) carry on filtering and electrolysis together, the ballast water discharged from a filter and an electrolysis unit(10) can satisfy standard for sterilization of ballast water based on the standard of the USCG (United States Coast Guard).

With reference to Fig.1 again, the ballast water treatment system according to an embodiment of the present invention will be explained. The first sensor(30) is connected with a filter and an electrolysis unit (10), receives the treated ballast water after the process of the filtering and electrolysis, and measures conductivity, temperature, and TRO(total residual oxidant) concentration of the received ballast water.

In this case, the first sensor unit (30) can receive only a part of the ballast water discharged from a filter and an electrolysis unit(10) through bypass.

This first sensor unit(30) is positioned connected to the control unit (100), transferring the conductivity, the temperature and TRO concentration of the ballast water measured in the first sensor unit(30) to the control unit(100).

A chlorine dioxide precursor storage tank (71), as a storage tank for a chlorine dioxide precursor to generate chlorine dioxide(ClO₂), is connected to the chlorine dioxide generation unit(70) through a pipe.

As for the chlorine dioxide precursor stored in the chlorine dioxide precursor storage tank (71), may be one or more one among NaClO₂, HCl, NaOCl.

And, the chlorine dioxide generation unit(70), as previously described , through a pipe, is connected with the chlorine dioxide precursor storage tank (71), and is connected to the control unit (100).

In this case, the pipe connecting the chlorine dioxide generation unit(70) and the chlorine dioxide precursor storage tank(71) can be formed including a pump. Due to the vacuum generated by operation of the pump, the chlorine dioxide precursor stored in the chlorine dioxide precursor storage tank(71) is transferred to the chlorine dioxide generation unit(70).

This chlorine dioxide generation unit(70) produces chlorine dioxide by mixing the chlorine dioxide precursor and transfers chlorine dioxide , which is produced according to a control signal transmitted from the control unit (100), to the ballast piping.

Ballast piping may be a pipe connecting a filter and an electrolysis unit(10) with the ballast tank(50), or a pipe connecting a filter and an electrolysis unit(10) with the first sensor unit(30).

In this case, the concentration of chlorine dioxide produced from the chlorine dioxide generation unit(70) is from 1,000 to 10,000mg/L. Chlorine dioxide generation unit(70) can introduce chlorine dioxide produced into the ballast piping after diluting.

Chlorine dioxide generation unit (70) is capable of generating chlorine dioxide by using the following chemical formula 1.

### [Chemical formula 1]

2NaClO₂ + NaOCl + 2HCl → ClO₂ + 3NaCl + H₂O ----- (1)

5Na₂S₂O₃ + 8ClO₂ + 9H₂O → 10NaHSo₄ + 8HCl ------- (2)

Na₂S₂O₃ + 2NaClO₂ + H2O → 2NaHSO₄ + 2NaCl ------- (3)

In the above Chemical formula 1, the formula (1) is for the production of ClO₂ by diluting and mixing with NaClO₂, NaOCl, HCl according to the reaction mole number.

In addition, in the above Chemical formula 1, the formula (2) and (3) is for the neutralization reaction for residual ClO₂ and ClO₂⁻ on the condition of deballasting.

As already explained, the chlorine dioxide generation unit(70), according to the control signal of the control unit(100), introduces chlorine dioxide into the ballasting piping. At this time, the control signal generated from the control unit (100) may be a signal to introduce or not to introduce the chlorine dioxide, and also to adjust the input amount of the chlorine dioxide.

A control unit (100) for generating these control signals will be described later in more detail.

Continuously, with reference to Fig. 1, a ballast tank(50) is located with the connection of the first sensor unit(30). In this case, when the first sensor unit(30) is configured to be bypassed from a filter and an electrolysis unit(10), a ballast tank(50) is located with the connection of a filters and an electrolysis unit(10).

This ballast tank(50), After filtering and sterilizing microorganisms from the electrolysis, and ballasting process of neutralization of oxidants generated from the electrolysis, receives the treated vessel ballast water and stores ballast water in the tank.

And then, the outlet(2) is a structure for discharging the ballast water stored in the ballast tank(50) to the outside of the ship. In order to discharge ballast water stored in the ballast tank(50) to the outside of the ship, the process to neutralize the ballast water is necessary.

Accordingly, an automatic neutralization treatment device(40) includes the neutralizing agent for neutralizing the ballast water stored in the ballast tank(50), and introduce a neutralizing agent in the an automatic neutralization treatment device(40) into deballasting piping according to the a neutralizing agent input control signal transmitted from the control unit(100).

In this way, ClO₂ or Br₂ resided in the ballast water that is stored in the ballast tank(50) is neutralized.

In this case, the deballasting piping may be a pipe either connecting the ballast tank(50) and outlet (2) or connecting the ballast tank(50) and the second sensor unit(31).

And, a UV/TiO₂ System(60) is located with the connection of the control unit(100) and may be located with the connection of the deballasting piping which leads to the outlet(2) from a ballast tank(50).

A UV/TiO₂ system (60) includes a coated plate, irradiates UV(ultra violet ray) to the microorganisms sterilized ballast water which is stored in a ballast tank(50). In this case, according to the irradiation of UV in the ship ballast water, hydroxyl groups (hereinafter referred to as "OH radical") is generated on the surface. By OH radical, microorganisms which is either alive or in the state of regrowth in the ballast water is sterilized.

In this case, coated plates may be formed in a mesh type or a punched type.

In addition, the oxygen generated from the residual oxidants or during the of electrolysis process of ballast water, by reacting with UV and TiO2, produces high concentration of OH radicals, which have efficiency of sterilizing microorganisms.

Accordingly, by UV/TiO₂ System (60), microorganisms will be sterilized effectively in the deballasting water and by using residual oxidants, generate OH radical, which make an effect that chemicals such as neutralizing agent necessary for neutralization treatment can be minimized and the efficiency of sterilizing microorganisms in the ballast water can satisfy USCG much more.

The second sensor unit(31) has a configuration for measuring the total residual oxide (TRO) concentration of neutralized deballasting water, measuring TRO concentration of ballast water flowing toward the outlet (2) from the ballast tank (50), transferring the measured concentration values of residual oxidants of deballasting water to the control unit (100).

And, the control unit(100) is located with the connection of the flow rate measuring unit(20), a filter and an electrolysis unit(10), the first sensor unit(30), the second sensor unit(31), an automatic neutralization treatment device(40), UV / TiO2 system(60), a chlorine dioxide generation unit(70). And, the control unit(100) receives measurements from the flow rate measuring unit(20), the first sensor unit(30) and from the second sensor unit(31), generate a control signal according to the measured values, transfers a generated control signal to one of a filter and an electrolysis unit(10), an automatic neutralization treatment device(40), a chlorine dioxide generation unit(70).

Describing in more detail the generation of the control signal of the control unit(100), the control unit(100), depending on the flow rate values that are transmitted from the flow rate measuring part (20), controls the strength of electrolysis in a filter and an electrolysis unit(10). As an example, if the flow rate value of the ballast water that has been transmitted from the flow rate measuring unit (20) is big, the control unit(100) generate a control signal for controlling so as to increase the electrolysis intensity of a filter and an electrolysis unit (10), whereas , if the flow rate value of the ballast water that has been transmitted from the flow rate measuring unit(20) is small, the control unit(100)generate the control signal to lower the electrolysis intensity of a filter and an electrolysis unit (10).

And, the control unit(100), depending on the value of the characteristic measurements of the transmitted ballast water from the first sensor unit(30), controls the electrolysis intensity of a filter and an electrolysis unit (10). As an example, if the conductivity of the ballast water that is measured by the first sensor unit (30) has a higher value than the reference value, the control unit (100) lower the electrolysis intensity of a filter and an electrolysis unit (10) to generates a control signal for controlling so as to decrease the current application value, whereas, if measured ballast water conductivity has a lower value than the reference value at the first sensor unit(30), the control unit(100), in order to enhance the electrolysis intensity of a filter and an electrolysis unit(10) generates a control signal for controlling so as to increase the current application value.

In addition, the control unit(100), when the temperature of the ballast water that is measured by the first sensor unit(30) is above about 10 °C, the control unit (100) generate a control signal to increase chlorine dioxide generation amount of chlorine dioxide generation unit(70), whereas, when the temperature of the ballast water that is measured by the first sensor unit(30) is less than about 10 °C, the control unit(100) generate a control signal to lower the chlorine dioxide generation amount of chlorine dioxide generation unit(70).

And, the control unit (100) controls chlorine dioxide generation amount of chlorine dioxide generation unit(70) according to the residual oxidant concentration(TRO concentration) in the ballast water that has been transmitted from a first sensor unit(30). As an example, if the value measured in a first sensor (30) is higher (2 ∼ 3ppm or more) than the residual oxidant concentration value of a reference value of the ballast water, the control unit(100) generates a control signal for controlling so as chlorine dioxide generation unit (70) generates a large amount of chlorine dioxide, whereas, the value measured in a first sensor (30) is lower (less than 2 ∼ 3ppm) than the residual oxidant concentration value of a reference value of the ballast water, the control unit (100) generates a control signal for controlling so as chlorine dioxide generation unit (70) generates a small amount of chlorine dioxide.

In addition, the control unit(100) controls the amount of UV irradiation of the UV/TiO₂ System(60) according to the value of the deballasting water residual TRO (residual oxidant) that has been transmitted from the second sensor unit (31). As an example, if the residual oxidant concentration in deballasting water that is measured by the second sensor unit(31) has a high value, the controller (100) generate a control signal so as controlling the UV/TiO₂ system(60) irradiating much more ultraviolet rays to the ballast water, whereas, if the residual oxidant concentration in deballasting water that is measured by the second sensor unit(31) has a lower value, the controller (100) generate a control signal so as controlling the UV/TiO₂ system(60) reducing ultraviolet rays in ballast water.

In addition, the control unit(100) controls the amount of the input amount of neutralizing agent of an automatic neutralization device(40) according to the value of the deballasting water residual TRO (residual oxidant) that has been transmitted from the second sensor unit (31). As an example, if the residual oxidant concentration in deballasting water that is measured by the second sensor unit(31) has a high value, the controller (100) generate a control signal so as controlling an automatic neutralization device(40) much introducing neutralizing agent to the ballast water, whereas, if the residual oxidant concentration in deballasting water that is measured by the second sensor unit(31) has a lower value, the controller (100) generate a control signal so as controlling an automatic neutralization device(40) reducing input amount of a neutralizing agent to the ballast water.

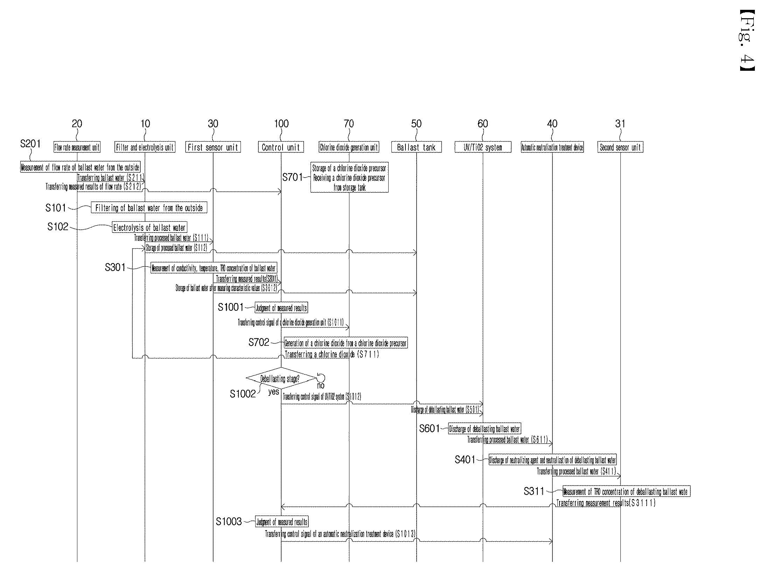

Next, with reference to Fig. 4, the operation of the ballast water treatment system of the present invention will be described.

As shown in Fig. 4, firstly, a flow rate measuring unit(20) measures the flow rate of the ballast water that has been introduced from the outside to the ballast water treatment system (S201). If it is bypassed and measured the flow rate of only a part of the ballast water that has been introduced from the outside, a flow rate measuring unit(20) transfers(S212) the measured flow rate to a filter and an electrolysis unit (10). If the flow rate measuring unit (20) receives the whole of the ballast water that has been introduced from the outside , when measuring the flow rate, a flow rate measuring unit (20) transfers(S211) the introduced ballast water which is flowed into the flow rate measuring unit(20) to a filter and an electrolysis unit(10), and transmits(S212) the measured flow rate values to a filter and an electrolysis unit (10) at the same time.

A filter and an electrolysis unit(10) are introduced ballast water from the outside (or a flow rate measuring unit(20)), filter(S101) the introduced ballast water. In this case, , by using filter elements(130) equipped in a filter and an electrolysis unit(10), the solid foreign materials and the microorganisms in the ballast water are filtered and the dusts accumulated in the filter elements(130) of the ballast water washed out through the backwash pipe(160).

Then, a filter and an electrolysis unit (10) uses plural electrodes module (121) to electrolyze (S102) the ballast water that has been primarily filtered by the filter elements(130) and transfer(S111) electrolyzed treated ballast water to the first sensor unit(30) along the pipe.

In this case, filtered and electrolyzed treated ballast water in a filter and an electrolysis unit(10) transferred to a ballast tank (50) along the ballast piping and stored(S112).

The first sensor unit(30) measures(S301) the conductivity, the temperature, and the concentration of TRO(residual oxidant) of the ballast water discharged from a filter and an electrolysis unit(10), and transfers(S3011) the measurement values of sea water characteristics to the control unit (100)

In this case, ballast water measured of characteristic of the ballast water in the first sensor unit (30) is transferred to the ballast tank(50) and is stored(S3012).

Next, the control unit(100), according to the characteristic measurement values of the ballast water that has been transmitted from the first sensor unit (30), determines(S1001) the level of contamination of the ballast water.

In this case, according to the characteristic measurement values of the ballast water, the control unit(100) transfer(S1011) a control signal to control the chlorine dioxide generation amount to the chlorine dioxide generation unit(70).

A chlorine dioxide generation unit(70) which is transmitted to a control signal from the control unit(100) receives(S601) the chlorine dioxide precursor from a chlorine dioxide precursor storage tank(71), and stores it. Depending on the chlorine dioxide generation control signal transmitted from the control unit (100), a chlorine dioxide generation unit(70) generate(S602) chlorine dioxide from the chlorine dioxide precursor.

In this case, the chlorine dioxide generated from the chlorine dioxide generation unit(70) is introduced(S611) to the treated ballast water in a filter and an electrolysis unit (10).

And, the control unit(100) determine(S1002) whether the ballast water treatment process is deballasting step (S1002) or not. In this case, when the ballast water treatment process is not a deballasting step, the control unit (100) does not perform any separate step. On the other hand, when the ballast water treatment process is determined as deballasting step, the control unit(100) transfers(S1012) a control signal to an automatic neutralization treatment device(40) so as to eject a neutralizing agent by an automatic neutralization treatment device(40) (S1012).

In this case , when the ballast water treatment system is in a deballasting step , the ballast tank(50) transfers(S501) deballasting water to the automatic neutralization treatment device(40).

Thus, an automatic neutralization treatment device(40) neutralize(S401) the deballasting water discharging a neutralizing agent to the deballasting water discharged from the ballast tank(50). In this case, discharged from an automatic neutralizing device (40) (S401) a neutralizing agent is not directly charged into the ballast tanks (50), so as to extend from the ballast tanks (50) to the ballast water outlet (2) it is preferable to put into de- ballast computing piping located .

In this case, a neutralizing agent discharged(S401) from an automatic neutralization treatment device(40) is not directly discharged into the ballast tanks (50),and recommended to discharge through the deballasting piping which located toward ballast water outlet(2) from the ballast tank(50).

And, a UV/TiO₂ System (60) irradiates ultraviolet rays to deballasting water transferred(S501) from the ballast tanks(50) and to produce OH radicals, and to sterilize(S601) residual microorganisms.

Deballasting water sterilized microorganisms in a UV/TiO₂ System (60) is transmitted (S611) to the automatic neutralization treatment device(40).

After then, the second sensor unit(31) measures(S311) the TRO concentration of deballasting water neutralized in an automatic neutralization treatment device(40), transfers(S3111) the measured TRO concentration to the control unit(100).

The control unit(100) receiving measured TRO concentration values in the second sensor unit(31) determine(S1003) the measurement results, and generate(S1013) a control signal for controlling the amount of neutralizing agent to be discharged from an automatic neutralizing device (40) and a control signal for the control of the ultraviolet irradiation intensity of a UV / TiO₂ system(60).

In accordance with this process, the ballast water can get a efficient ballasting and deballasting treatment, and sterilization standards of the treated ballast water is to satisfy the USCG standards.

**[Description of a symbol]**

| | | |
|---|---|---|
| 1 : | Inlet for sea water | 2 : Outlet of ballast water |
| 10 : | Filter and electrolysis unit | 20 : Flow rate measurement unit |
| 30 : | Fist sensor unit | 31 : Second sensor unit |
| 40 : | Automatic neutralization treatment device | |
| 50 : | Ballast tank | |
| 60 : | UV/TiO₂ System | 70 : Chlorine dioxide generation unit |
| 71 : | Chlorine dioxide precursor storage tank | |
| 100 : | Control unit | |
| 121 : | Electrode module | 122 : Electrode gap spacer |
| 125 : | Electrode module housing | 126 : Electrode bus bar |

## Claims

1. A ballast water treatment system comprising:
a filter and an electrolysis unit for receiving ballast water from the outside, and filtering and electrolyzing the ballast water;
a first sensor unit for measuring seawater characteristics of the ballast water passing through the filter and the electrolysis unit;
a control unit for determining a contamination level of the ballast water according to the measured seawater characteristic values so as to generate control signals for determining the strength of electrolysis and the input amount of chlorine dioxide, which is located in connection with the first sensor unit, receiving the measured seawater characteristic values from the first sensor;
a chlorine dioxide generation unit for generating the chlorine dioxide, receiving the control signal from the control unit, discharging or not discharging the chlorine dioxide according to the control signal;
a UV/ TiO₂ system which includes a TiO₂-coated plate, generates an OH radical through an interaction between ultraviolet rays and TiO₂ so as to enable the OH radical to sterilize residual microorganisms included in the ballast water passing through the filter and the electrolysis unit;
an automatic neutralization treatment device which includes a neutralizing agent, receives a neutralizing agent discharge signal from the control unit, and neutralizes the ballast water passing through the filter and the electrolysis unit; and
a second sensor unit for measuring the TRO concentration of the ballast water neutralized in the automatic neutralization treatment device and transferring the measurement result to the control unit, wherein the control unit generates a control signal for controlling the amount of the neutralizing agent discharged from the automatic neutralization treatment device according to the measurement result received from the second sensor unit.

2. A ballast water treatment system according to claim 1, wherein the filter and the filter of the electrolysis unit is a disk filter.

3. A ballast water treatment system according to claim 1, wherein the filter and the electrolysis unit comprising the accumulated circular disk-typed plural electrodes.

4. A ballast water treatment system according to claim 1, wherein the seawater characteristics measured in the sensor unit is one of the conductivity, the temperature, or TRO(total residual oxidant) concentration of ballast water.

5. A ballast water treatment system according to claim 1, wherein comprising a chlorine dioxide precursor storage tank which stores the chlorine dioxide precursor and transfers the chlorine dioxide precursor to the chlorine dioxide generation unit.

6. the chlorine dioxide precursor according to claim 6, wherein the chlorine dioxide precursor may be NaClO₂, HCl, NaOCl.

7. A ballast water treatment system according to claim 1, wherein the TiO₂-coated plate plates having one of the forms of meshed or punched plate.
